# EUROPÄISCHE PATENTSCHRIFT

(11) **EP 1 904 262 B1**
(45) Veröffentlichungstag und Bekanntmachung des Hinweises auf die Patenterteilung: **11.04.2012**
(21) Anmeldenummer: 06754291.0
(22) Anmeldetag: 12.06.2006
(51) Int. Cl.: B23K 31/12

(54) **FEHLERSUCHSYSTEM ZUM ERKENNEN VON FEHLERSTELLEN AN SCHWEISSNÄHTEN**
DEFECT DETECTION SYSTEM FOR IDENTIFYING DEFECTS IN WELD SEAMS
SYSTEME DE RECHERCHE DE DEFAUTS POUR DETECTER DES EMPLACEMENTS DE DEFAUT SUR DES CORDONS DE SOUDURE

(30) Priorität: 13.06.2005 DE 102005027342
(43) Veröffentlichungstag der Anmeldung: 02.04.2008
(73) Patentinhaber: ABB RESEARCH LTD., 8050 Zürich (CH)
(72) Erfinder: DAI, Fan, 64673 Zwingenberg (DE); MATTHIAS, Börn, 76669 Bad Schönborn (DE); KOCK, Sönke, 72463 Västeras (SE)
(74) Vertreter: Miller, Toivo
(86) Internationale Anmeldenummer: PCT/EP2006/005597
(87) Internationale Veröffentlichungsnummer: WO 2006/133875

(56) Entgegenhaltungen:
- US-A- 5 240 329
- US-A- 6 024 273
- US-A1- 2004 134 970
- US-B1- 6 757 055

## Beschreibung

Die Erfindung betrifft ein automatisches Fehlersuchsystem zur automatischen Erkennung und Auswertung von Fehlerstellen an Schweißnähten, wie es beispielsweise bei Schweißrobotern zum Einsatz kommt. Außerdem bezieht sich die Erfindung auf ein Verfahren zum Betreiben eines solchen Systems.

Die Qualität einer Schweißnaht wird üblicherweise mittels externer optischer Erkennungssysteme zwar automatisch erfasst, jedoch wird die Auswertung der Informationen zur Fehlererkennung von einem externen Computersystem mit einem damit verbundenen hohen Zeitaufwand durchgeführt. Dem für die Fehlererkennung verwendeten Computersystem, auch Auswerteeinrichtung genannt, werden beispielsweise über eine serielle Schnittstelle, einen Feldbus, ein Gerätenetzwerk oder analoge bzw. digitale Ein/- Ausgabeeinheiten, die für die Fehlererkennung und Beurteilung relevanten Informationen übertragen. Für die Kommunikation des Erfassungssystems mit der Auswerteeinrichtung werden spezielle Protokolle benötigt, die für die jeweils verwendeten Erfassungssysteme und Robotersysteme anzupassen sind.

Bei der Verarbeitung der Informationen über die Qualität der Schweißnaht mittels der herkömmlichen optischen Erkennungssysteme die Überwachungsgeschwindigkeit zur Beurteilung der Qualität der Schweißnaht für viele Anwendungen oft zu gering oder die Abtastgenauigkeit ist zu grob, wodurch eine Echtzeitüberwachung der Schweißnaht nicht ausführbar ist.

Eine direkte Nutzung der ermittelten Informationen über die Qualität der Schweißnaht, beispielsweise für die Steuerung der Schweißeinrichtung des Robotersystems, um automatisch und somit innerhalb kürzester Zeit auf Fehlerursachen zu reagieren, ist mit den gegenwärtig eingesetzten Fehlersuch- und Auswertesystemen nicht durchführbar.

Ausgehend von den beschriebenen Nachteilen liegt der Erfindung die Aufgabe zugrunde, ein automatisches Fehlersuchsystem zum Erkennen und zur Auswertung von Fehlerstellen an Schweißnähten anzugeben, welches die Zeitdauer zur Erfassung und Auswertung der Fehlerstellen reduziert, wodurch eine Echtzeitüberwachung der Qualität der Schweißnähte ausführbar wird und der Zeitaufwand zur Reaktion auf die Fehlerursachen reduziert wird.

Diese Aufgabe wird erfindungsgemäß durch ein automatisches Fehlersuchsystem der eingangs genannten Art mit den im Anspruch 1 angegebenen Merkmalen gelöst. Vorteilhafte Ausgestaltungen, Verbesserungen des erfindungsgemäßen Systems sowie ein Verfahren zur Ausführung des Systems sind in weiteren Ansprüchen und in der Beschreibung angegeben.

Das erfindungsgemäße Fehlersuchsystem zum Erkennen und zur Auswertung von Fehlerstellen an Schweißnähten umfasst eine Abtastvorrichtung, die an einer Bewegungsvorrichtung einer Bearbeitungseinrichtung abgebracht ist, wobei die Abtastvorrichtung durch die Bewegungsvorrichtung über wenigstens eine zu untersuchende Schweißnaht bewegbar ist.

Die Bearbeitungseinrichtung ist vorzugsweise eine Werkzeugmaschine, ein Roboter oder ein Robotersystem, insbesondere ein Schweißrobotersystem.

Erfindungsgemäß ist die Abtastvorrichtung dafür vorgesehen, die Schweißnaht mit einer vorgebbaren Frequenz abzutasten, wobei einerseits die Abtastvorrichtung über die zu untersuchende Schweißnaht bewegbar ist oder andererseits die Schweißnaht gegenüber der Abtastvorrichtung bewegbar ist. Dabei korreliert jede Abtastung mit einem Zeitsignal. Mit dem Zeitsignal wird der Zeitpunkt der Abtastung wenigstens einer fehlerstellenbehafteten Abtaststelle erfasst.

Das den Zeitpunkt der Abtastung charakterisierende Zeitsignal und ein den Geschwindigkeitsverlauf der Bewegungsvorrichtung charakterisierendes Signal wird von einer Steuereinheit der Bewegungsvorrichtung bereitstellt.

Die Abtastvorrichtung ist mit einem Analysemodul verbunden, welches aus den durch die Abtastungen gewonnenen Abtastsignalen die Koordinaten der Fehlerstellen erkennt und speichert.

Das Analysemodul wirkt mit einem Lokalisationsmodul zusammen, welches aus der Auswertung eines Geschwindigkeitsverlaufes der Bewegungsvorrichtung während der Abtastungen, aus den fehlerstellenbehafteten Abtaststellen zugeordneten Zeitsignalen und der vom Analysemodul bereitgestellten Koordinaten der Fehlerstellen, die räumliche Anordnung der Fehlerstellen innerhalb der Schweißnaht, beispielsweise die Höhe, Breite und Länge der Schweißnaht ermittelt.

Das Analysemodul und das Lokalisierungsmodul bilden eine Bildbearbeitungssoftware, die in einer Datenverarbeitungseinrichtung integriert ist.

In einer vorteilhaften Ausgestaltung der Erfindung ist vorgesehen, dass Fehler über mehrere Abtastungen zur Ermittlung der Ausdehnung einer Fehlerstelle erfassbar sind.

Die Bildbearbeitungssoftware ist mit der Steuereinheit der Bearbeitungseinrichtung verbunden, welche die ermittelte räumliche Anordnung der Fehlerstellen weiterverarbeitet und beispielsweise zur Steuerung des Roboterarmes für eine Ausbesserung der Schweißnaht einsetzt.

Durch die Verbindung der mittels des Analyse- und Lokalisierungsmoduls ausgeführten Fehlererfassung und -auswertung mit einer Steuereinheit der Bearbeitungseinrichtung ist mittels einer in der Steuereinheit befindlichen Applikationssoftware in vorteilhafter Weise eine automatische Weiterverarbeitung der Informationen über die Fehlerstellen möglich, um unter Echtzeitbedingungen automatisch auf Fehlerursachen zu reagieren und beispielsweise eine Reparatur der Schweißnähte durchzuführen.

In einer weiteren vorteilhaften Ausgestaltung der Erfindung kommunizieren das in der Datenverarbeitungseinrichtung integrierte Analysemodul und das Lokalisierungsmodul über eine standardisierte standardisierten XML (eXtensible Markup Language)- Schnittstelle mit der Steuereinheit der Bearbeitungseinrichtung.

Das Verfahren mit dem die Aufgabe weiterhin gelöst wird, ist dem Anspruch 13 zu entnehmen. Dabei wird eine an einer Bewegungsvorrichtung einer Bearbeitungseinrichtung angebrachte Abtastvorrichtung mit einer definierten Geschwindigkeit über wenigstens eine zu untersuchende Schweißnaht bewegt, wobei die Schweißnaht mittels der Abtastvorrichtung mit einer vorgebbaren Frequenz abgetastet wird und jede Abtastung mit einem zugeordneten Zeitsignal in Beziehung gesetzt wird. Somit wird mit dem Zeitsignal der Zeitpunkt der Abtastung wenigstens einer fehlerstellenbehafteten Abtaststelle erfasst.

Mittels eines Analysemoduls werden aus den durch die Abtastungen gewonnenen Abtastsignalen die Koordinaten der Fehlerstellen ermittelt und gespeichert.

Durch die Auswertung eines Geschwindigkeitsverlaufes der Bewegungsvorrichtung während der Abtastungen, des den fehlerstellenbehafteten Abtaststellen zugeordneten Zeitsignals und der vom Analysemodul bereitgestellten Koordinaten der Fehlerstellen wird mittels eines Lokalisationsmoduls die räumliche Anordnung der Fehlerstellen der Schweißnaht ermittelt.

Die ermittelte räumliche Anordnung der Fehlerstellen wird automatisch der Steuereinheit der Bearbeitungseinrichtung zur Weiterverarbeitung in Echtzeit übertragen.

Die der Applikationssoftware der Steuereinheit zur Verfügung gestellten Informationen über die erkannten Fehlerstellen, insbesondere deren räumliche Ausdehnung und Anordnung auf der zu untersuchenden Schweißnaht, ermöglichen innerhalb kürzester Zeit eine Reaktion der Steuereinheit auf die Bewegungsabläufe der Bearbeitungseinheit.

Somit wird mit dem erfindungsgemäßen Verfahren zur automatischen und beschleunigten Erkennung und Auswertung von Fehlerstellen an Schweißnähten die Flexibilität und Produktivität bei der Erzeugung von Schweißnähten in entscheidenden Umfang erhöht. Anhand der in den folgenden Figuren dargestellten Ausführungsbeispiele sollen die Erfindung sowie vorteilhafte Ausgestaltungen, Verbesserungen und weitere Vorteile der Erfindung näher erläutert und beschrieben werden.

Es zeigen:

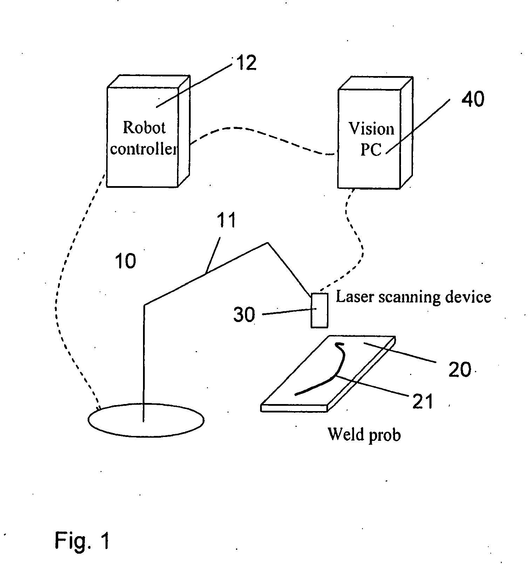

- Fig. 1: eine Ausführungsform des erfindungsgemäßen Fehlersuchsystems zum Erkennen von Fehlerstellen an Schweißnähten, beispielhaft für einen Schweißroboter,
- Fig. 2: einen beispielhaften Datenaustausch zwischen dem Roboter, der Laserabtastvorrichtung und der Bildbearbeitungssoftware,
- Fig. 3: einen beispielhaften Verfahrensablauf zum Erkennen von Fehlerstellen an Schweißnähten eines Werkstückes, und
- Fig. 4: beispielhaft die Kommunikation der Steuereinheit des Roboters mit der Datenverarbeitungseinrichtung über eine Ethernet- Netzwerkverbindung.

**Fig**. 1 zeigt eine Ausführungsform des erfindungsgemäßen Fehlersuchsystems zum Erkennen von Fehlerstellen an Schweißnähten 21 auf einem Werkstück 20 beispielhaft für einen Schweißroboter 10, welcher eine Steuereinheit 12 zur Steuerung der Bewegungen eines Roboterarmes 11 und eine als Laserabtastvorrichtung ausgeführte Abtastvorrichtung 30 aufweist. Die am Roboterarm 11 angebrachte Abtastvorrichtung 30 wird mit einer gleichmäßig vorgebbaren Geschwindigkeit über die zu untersuchende Schweißnaht 21 bewegt und die Schweißnaht 21 mit einer vorgebbaren Frequenz, vorzugsweise 500Hz, abtastet, wobei jede Abtastung mit einem Zeitsignal korreliert. Das Zeitsignal erfasst somit den Zeitpunkt der Abtastung der fehlerstellenbehafteten Abtaststelle, im Folgenden auch als Fehlerstelle bezeichnet.

Die Laserabtastvorrichtung 30 kommuniziert mit einer als Personal Computer (PC) ausgeführten Datenverarbeitungseinrichtung 40 über eine optische Hochgeschwindigkeitsverbindung.

Die von der Laserabtastvorrichtung 30 zu einem im PC 40 übertragenen durch die Abtastungen gewonnenen Abtastsignale und Zeitsignale werden vom einem im PC 40 integrierten Analysemodul ausgewertet und daraus die Koordinaten der Fehlerstellen ermittelt.

Das Analysemodul ist weiterhin dafür eingerichtet, die ermittelten Koordinaten der Fehlerstellen zu speichern und einem ebenfalls im PC 40 integrierten Lokalisierungsmodul zu übertragen.

Das Lokalisationsmodul ist dafür vorgesehen, durch eine Auswertung eines Geschwindigkeitsverlaufes des Roboterarmes 11 während der Abtastungen, der den fehlerstellenbehafteten Abtaststellen zugeordneten Zeitsignale und der vom Analysemodul bereitgestellten Koordinaten der Fehlerstellen, die räumliche Anordnung der Fehlerstellen der Schweißnaht 21 zu ermitteln.

Das Lokalisationsmodul überträgt die Informationen über die räumliche Anordnung der ermittelten Fehlerstellen an die Steuereinheit 12 des Roboters 10, welche die ermittelte räumliche Anordnung der Fehlerstellen mittels einer in der Steuereinheit 12 integrierten Applikationssoftware weiterverarbeitet.

Das Analysemodul und das Lokalisierungsmodul bilden eine Bildbearbeitungssoftware, welche optional auch dafür vorgesehen ist, die Abtastvorrichtung 30 zu bedienen und zu steuern.

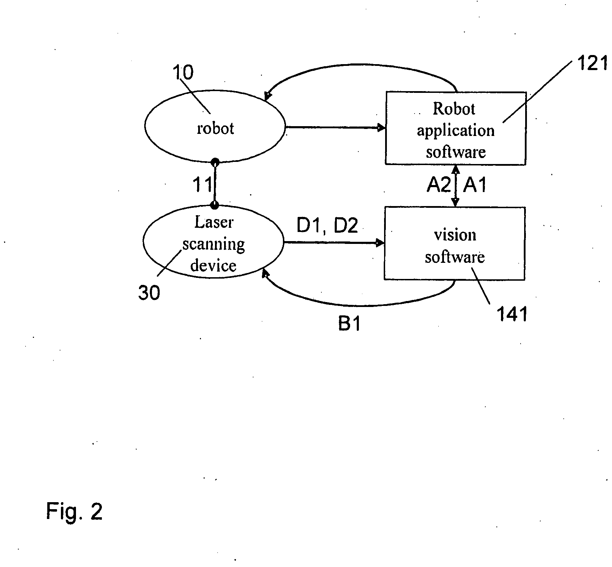

**Fig.** 2 zeigt beispielhaft den Datenaustausch zwischen dem Roboter 10, der mit dem Roboterarm 11 verbundenen Laserabtastvorrichtung 30 und der in der Datenverarbeitungseinrichtung 40 integrierten Bildbearbeitungssoftware 141, wobei die Bildbearbeitungssoftware 141 entsprechende Befehle B1 zur Steuerung der Laserabtastvorrichtung 30 bereitstellt.

In der Bildbearbeitungssoftware 141 sind das Analysemodul zur Ermittlung und Speicherung der Koordinaten der Fehlerstellen und das Lokalisierungsmodul zur Ermittlung der räumlichen Anordnung der Fehlerstellen der Schweißnaht 21 integriert.

Nach einer mit einer vorgebbaren Frequenz durchgeführten Abtastung der Schweißnaht 21 mittels der Laserabtastvorrichtung 30 werden der Bildbearbeitungssoftware 141 die Abtastsignale D1 und der erfasste Zeitpunkt der Abtastung einer fehlerstellenbehafteten Abtaststelle, auch Zeitsignal D2 genannt, übertragen und die Koordinaten der Fehlerstellen erkannt und ausgewertet. Der für die Auswertung benötigte Geschwindigkeitsverlauf A1 der Bewegungsvorrichtung während der Abtastung der Schweißnaht 21 wird dem Analysemodul von der Applikationssoftware 121 der Steuereinheit 12 des Roboters 10 bereitgestellt. Die Applikationssoftware 121 der Steuereinheit 12 ist auch dafür vorgesehen, der Bildbearbeitungssoftware 141 einen Befehl zu übertragen, um mit der Verarbeitung der durch die Abtastung bereitgestellten Informationen zu beginnen.

Aus dem den fehlerstellenbehafteten Abtaststellen jeweils zugeordnetem Zeitsignal D2, der vom Analysemodul bereitgestellten Koordinaten der Fehlerstellen und der Auswertung des Geschwindigkeitsverlaufes A1 der Bewegung des Roboterarmes 11 während der Abtastungen, ermittelt das Lokalisierungsmodul die räumliche Anordnung der Fehlerstellen auf der Schweißnaht 21.

Ein die ermittelte räumliche Anordnung der Fehlerstellen auf der Schweißnaht 21 charakterisierendes Signal A2 wird der Applikationssoftware. 121 der Steuereinheit 12 des Roboters 10 zur Weiterverarbeitung, beispielsweise zur Steuerung des Roboterarmes 11 für die Reparatur der Schweißstelle 21, übertragen.

Die zur Bedienung und Steuerung der Laserabtastvorrichtung 30 erforderlichen Steuersignale B1 werden optional von der Bildbearbeitungssoftware 141 bereitgestellt.

Zur Kommunikation der Applikationssoftware 121 der Steuereinheit 12 des Roboters 10 mit Bildbearbeitungssoftware 141 ist eine standardisierten XML- Schnittstelle vorgesehen, die den Datenaustausch durch die Übertragung von Informationen im XML- Format zwischen der Steuereinheit 12 des Roboters 10 und der Bildbearbeitungssoftware 141 durchführt.

Mittels der standardisierten XML- Schnittstelle ist es somit möglich, dass die Abtastvorrichtungen 30 und Robotersteuerungen 12 unterschiedlicher Hersteller miteinander kommunizieren können, ohne dass eine aufwändige neue oder ergänzende Programmierung der Bildbearbeitungssoftware 141 erforderlich ist.

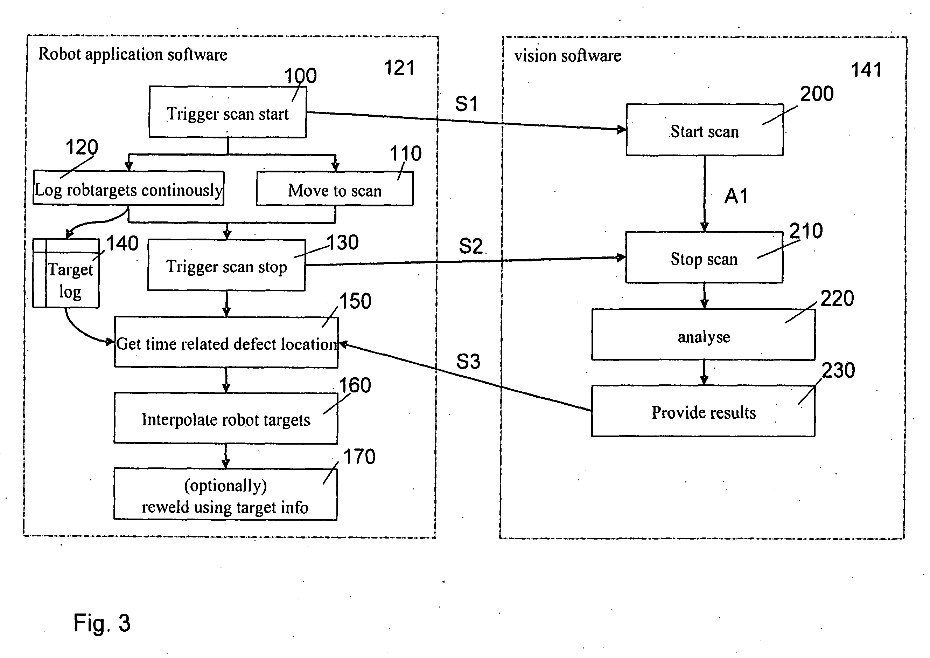

**Fig.** 3 zeigt an einen beispielhaften Verfahrensablauf zum Erkennen von Fehlerstellen an Schweißnähten eines Werkstückes den Datenaustausch zwischen der Applikationssoftware 121 der Steuereinheit 12 des Roboters 10 und der in der Datenverarbeitungseinrichtung 40 integrierten Bildbearbeitungssoftware 141.

Die Applikationssoftware 121 startet in einem ersten Schritt 100 die Auslösung der Abtastung der Schweißnaht 21 und sendet ein entsprechendes Signal S1 an die Bildbearbeitungssoftware 141.

In einem zweiten Schritt 110 wird der Roboterarm 11 über die abzutastende Schweißnaht 21 bewegt.

Alternativ kann der Roboterarm 11 in einem Schritt 120 kontinuierlich über die Schweißnaht 21 bewegt werden, um Fehlerstellen über mehrere Abtastungen zu erfassen und in einem vierten Schritt 140 in einem Protokoll zu speichern.

Nach Beendigung der Abtastung in einem dritten Schritt 130 wird ein weiteres Signal S2 an die Bildverarbeitungssoftware 141 übertragen.

Die Applikationssoftware 121 wirkt nunmehr so mit der Bildbearbeitungssoftware 121 zusammen, dass der für die Auswertung benötigte Geschwindigkeitsverlauf A1 aus dem Start der Abtastung S1 und der Beendigung der Abtastung S2 in den Programmschritten 210 und 220 von der Bildbearbeitungssoftware 141 verarbeitet wird.

Von der Bildbearbeitungssoftware 141 werden in einem weiteren Programmschritt 230 aus den von der Abtastvorrichtung 30 bereitgestellten Informationen die Koordinaten der Fehlerstellen und daraus unter Berücksichtigung des von der Applikationssoftware bereitgestellten Geschwindigkeitsverlaufes A1 der Abtastung die räumliche Anordnung der Fehlerstellen der Schweißnaht 21 ermittelt.

In einem letzten Programmschritt 240 werden die Informationen über die räumliche Anordnung der Fehlerstelle S3 der Schweißnaht 21 online an die Applikationssoftware 129 übertragen, welche daraus in einem fünften Schritt 150 unter Berücksichtigung der im dritten Schritt 130 oder alternativ im vierten Schritt 140 erfassten Abtastungen eine zeitbezogene Fehlerlokalisation auf der Schweißnaht 21 verarbeitet.

In einem sechsten Schritt 160 werden die Abweichungen gegenüber der vorgegebenen Form der Schweißnaht 21 erkannt und für die Steuerung des Roboterarmes 11 eingesetzt.

Optional ist in einem letzten Schritt 170 vorgesehen die im vorletzten Schritt 160 vorhandenen Informationen über die räumliche Ausdehnung der Fehlerstelle für eine Reparatur der Schweißnaht 21 zu nutzen.

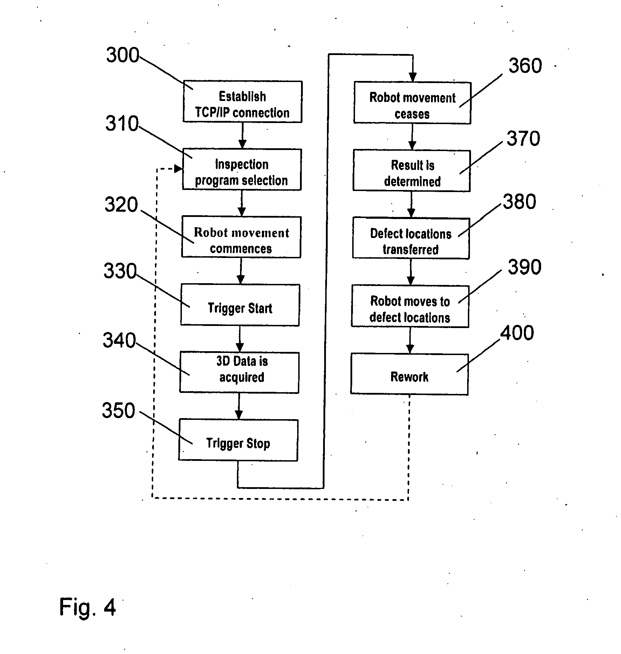

**Fig.** 4 zeigt beispielhaft die Kommunikation der Steuereinheit 12 des Roboters 10 mit der Datenverarbeitungseinrichtung 40, wobei die Steuereinheit 12 des Roboters 10 mit dem PC 40 über eine Ethernet- Netzwerkverbindung kommuniziert.

Sobald in einem ersten Verfahrensschritt 300 eine TCP/IP (Transmission Control Protocol over Internet Protocol) - Verbindung aufgebaut ist, wird in einem zweiten Verfahrensschritt 310 mittels der Steuereinheit 12 ein entsprechendes Fehlersuchprogramm ausgewählt und installiert.

Nach dem Start der Applikationssoftware 121 bewegt in einem dritten Verfahrensschritt 320 der Roboterarm 11 die Abtastvorrichtung 30 mit einer vorgebbaren Geschwindigkeit, beispielsweise von 100 mm/s entlang der Schweißnaht 21.

Gleichzeitig bildet die Bildbearbeitungssoftware 141 in einem vierten Verfahrensschritt 330 die in einer querverlaufenden Linie ausgeführte Abtastung der Abtastvorrichtung 30 über die Schweißnaht 21 nach, wobei die Frequenz der Abtastung der Schweißnaht 21 500 Hz beträgt.

In einem fünften Verfahrensschritt 340 wird die abgetastete Linie zu einem dreidimensionalen Schweißnahtprofil mit den Informationen über die Fehlerstellen zusammengestellt, aus welchen die Abweichungen gegenüber der vorgegebenen Form der Schweißnaht 21 erkennbar sind.

Nach Beendigung der Abtastung im sechsten Verfahrensschritt 350 und nach der Einstellung der Bewegung des Roboterarmes 11 in einem siebenten Verfahrensschritt 360 analysiert die Bildbearbeitungssoftware 141 in einem siebenden Verfahrensschritt 370 das mit der Abtastvorrichtung 30 ermittelte Schweißnahtprofil und es werden in einem weiteren Verfahrensschritt 380 die Informationen über die Fehlerstellen der Schweißnaht 21, beispielsweise nach einer Anforderung, zur Steuereinheit 12 des Roboters 10 übertragen.

In einem letzten Verfahrensschritt werden die Bewegungen des Roboterarmes 11 an die ermittelten Fehlerstellen angepasst, so dass der Roboter 10 in zusätzlichen Verfahrensschritt 400 in der Lage ist mittels seines Roboterarm 11 Reparaturen an der Schweißnaht 21 auszuführen.

### Bezugszeichenliste

- 10: Bearbeitungseinrichtung, Werkzeugmaschine, Roboter
- 11: Roboterarm
- 12: Steuereinheit
- 20: Werkstück
- 21: Schweißnaht
- 30: Abtastvorrichtung, Laserabtastvorrichtung
- 40: Datenverarbeitungseinrichtung
- 141: Bildbearbeitungssoftware
- 121: Applikationssoftware
- A1: Geschwindigkeitsverlauf der Bewegungsvorrichtung
- A2: Signal, welches die ermittelte räumliche Anordnung der Fehlerstellen auf der Schweißnaht 21 charakterisiert
- B1: Steuersignale
- D1: Abtastsignale
- D2: erfasste Zeitpunkt der Abtastung
- S1: Signal "Start der Abtastung"
- S2: Signal "Ende der Abtastung"
- S3: Informationen über die räumliche Anordnung der Fehlerstelle der Schweißnaht

## Patentansprüche

1. Fehlersuchsystem zum Erkennen von Fehlerstellen an Schweißnähten (21) mit einer Abtastvorrichtung (30), die an einer Bewegungsvorrichtung einer Bearbeitungseinrichtung abgebracht ist, wobei die Abtastvorrichtung (30) durch die Bewegungsvorrichtung über wenigstens eine zu untersuchende Schweißnaht bewegbar ist, **dadurch gekennzeichnet, dass**
- die Abtastvorrichtung (30) die Schweißnaht (21) mit einer vorgebbaren Frequenz abtastet,
- dass jede Abtastung mit einem Zeitsignal korreliert, wobei mit dem Zeitsignal der Zeitpunkt der Abtastung wenigstens einer fehlerstellenbehafteten Abtaststelle erfasst ist,
- ein Analysemodul vorgesehen ist, welches aus den durch die Abtastungen gewonnenen Abtastsignale die Koordinaten der Fehlerstellen ermittelt,
- das Analysemodul weiterhin dafür vorgesehen ist, die Koordinaten der Fehlerstellen zu speichern, und
- dass ein Lokalisationsmodul durch Auswertung eines Geschwindigkeitsverlaufes der Bewegungsvorrichtung während der Abtastungen, des den fehlerstellenbehafteten Abtaststellen zugeordneten Zeitsignals und der vom Analysemodul bereitgestellten Koordinaten der Fehlerstellen, die räumliche Anordnung der Fehlerstellen der Schweißnaht ermittelt.

2. Fehlersuchsystem nach Anspruch 1, **dadurch gekennzeichnet, dass** das Lokalisierungsmodul mit einer Steuereinheit der Bearbeitungseinrichtung verbunden ist, welche die ermittelte räumliche Anordnung der Fehlerstellen weiterverarbeitet.

3. Fehlersuchsystem nach Anspruch 2, **dadurch gekennzeichnet**, das die Steuereinheit der Bearbeitungseinrichtung die räumlichen Anordnung der Fehlerstellen mittels einer Applikationssoftware weiterverarbeitet.

4. Fehlersuchsystem nach einem der vorgenannten Ansprüche, **dadurch gekennzeichnet, dass** die Abtastvorrichtung eine Laserabtastvorrichtung (30) ist.

5. Fehlersuchsystem nach einem der vorgenannten Ansprüche, **dadurch gekennzeichnet, dass** Fehler über mehrere Abtastungen erfassbar sind.

6. Fehlersuchsystem nach einem der vorgenannten Ansprüche, **dadurch gekennzeichnet, dass** die Bearbeitungseinrichtung eine Werkzeugmaschine oder ein Robotersystem, insbesondere ein Schweißrobotersystem ist.

7. Fehlersuchsystem nach einem der Ansprüche 2 bis 6, **dadurch gekennzeichnet, dass** die Steuereinheit der Bewegungsvorrichtung ein den Geschwindigkeitsverlauf der Bewegungsvorrichtung charakterisierendes Signal und/oder das Zeitsignal bereitstellt.

8. Fehlersuchsystem nach einem der vorgenannten Ansprüche, **dadurch gekennzeichnet, dass** die Frequenz durch die Abtastvorrichtung vorgebbar ist.

9. Fehlersuchsystem nach einem der vorgenannten Ansprüche, **dadurch gekennzeichnet, dass** die Frequenz zur Abtastung der Schweißnaht 500 Hz beträgt.

10. Fehlersuchsystem nach einem der vorgenannten Ansprüche, **dadurch gekennzeichnet, dass** das Analysemodul und das Lokalisierungsmodul eine Bildbearbeitungssoftware bilden, die in einer Datenverarbeitungseinrichtung (40) integriert ist.

11. Fehlersuchsystem nach einem der vorgenannten Ansprüche, **dadurch gekennzeichnet, dass** das Analysemodul und das Lokalisierungsmodul in einer Datenverarbeitungseinrichtung integriert sind, welche über eine standardisierte XML- Schnittstelle mit der Steuereinheit der Bearbeitungseinrichtung kommuniziert.

12. Fehlersuchsystem nach einem der Ansprüche 1 bis 12, **dadurch gekennzeichnet, dass** die Abtastvorrichtung (30) mit einer gleichmäßigen vorgebbaren Geschwindigkeit bewegbar ist.

13. Verfahren zum Erkennen von Fehlerstellen an Schweißnähten (21), wobei eine an einer Bewegungsvorrichtung einer Bearbeitungseinrichtung angebrachte Abtastvorrichtung mit einer definierten Geschwindigkeit über wenigstens eine zu untersuchende Schweißnaht (21) bewegt wird, **dadurch gekennzeichnet, dass**
- die Schweißnaht (21) mittels der Abtastvorrichtung (30) mit einer vorgebbaren Frequenz abgetastet wird und jede Abtastung mit einem zugeordneten Zeitsignal in Beziehung gesetzt wird, wobei mit dem Zeitsignal der Zeitpunkt der Abtastung wenigstens einer fehlerstellenbehafteten Abtaststelle erfasst wird,
- mittels eines Analysemoduls aus den durch die Abtastungen gewonnenen Abtastsignale die Koordinaten der Fehlerstellen ermittelt und gespeichert werden, und
- mittels eines Lokalisationsmoduls durch Auswertung eines Geschwindigkeitsverlaufes der Bewegungsvorrichtung während der Abtastungen, des den fehlerstellenbehafteten Abtaststellen zugeordneten Zeitsignals und der vom Analysemodul bereitgestellten Koordinaten der Fehlerstellen, die räumliche Anordnung der Fehlerstellen der Schweißnaht ermittelt wird.

14. Verfahren nach Anspruch 13, **dadurch gekennzeichnet, dass** die ermittelte räumliche Anordnung der Fehlerstellen einer Steuereinheit (12) der Bearbeitungseinrichtung zur Weiterverarbeitung übertragen wird.

15. Verfahren nach Anspruch 14, **dadurch gekennzeichnet, dass** die räumliche Anordnung der Fehlerstellen mittels einer Applikationssoftware der Steuereinheit der Bearbeitungseinrichtung weiterverarbeitet wird.

16. Verfahren nach einem der Ansprüche 13 bis 15, **dadurch gekennzeichnet, dass** Fehler über mehrere Abtastungen erfasst werden.

17. Verfahren nach einem der Ansprüche 13 bis 16, **dadurch gekennzeichnet, dass** ein den Geschwindigkeitsverlauf der Bewegungsvorrichtung charakterisierendes Signal und/oder Zeitsignal von der die Steuereinheit der Bewegungsvorrichtung bereitstellt wird.

18. Verfahren nach einem der Ansprüche 13 bis 17, **dadurch gekennzeichnet, dass** die Frequenz durch die Abtastvorrichtung (30) vorgegeben wird.

19. Verfahren nach einem der Ansprüche 13 bis 18, **dadurch gekennzeichnet, dass** das Analysemodul und das Lokalisierungsmodul als Bildbearbeitungssoftware in einer Datenverarbeitungseinrichtung integriert werden.

20. Verfahren nach einem der Ansprüche 13 bis 19, **dadurch gekennzeichnet, dass** das Analysemodul und das Lokalisierungsmodul in einer Datenverarbeitungseinrichtung integriert werden, welche mit der Steuereinheit der Bearbeitungseinrichtung über eine standardisierte XML Schnittstelle kommuniziert.

21. Verfahren nach einem der Ansprüche 13 bis 20, **dadurch gekennzeichnet, dass** die Abtastungsvorrichtung mit einer gleichmäßigen vorgebbaren Geschwindigkeit bewegt wird.

22. Verwendung des erfindungsgemäßen Fehlersuchsystems und Verfahrens nach einem der Ansprüche 1 bis 21 zum Reparieren von defekten Schweißstellen.

## Claims

1. Defect detection system for identifying defects in weld seams (21) having a scanning apparatus (30) which is fitted to a movement apparatus of a processing device, with the scanning apparatus (30) being moveable by the movement apparatus over at least one weld seam to be examined, **characterized in that**
- the scanning apparatus (30) scans the weld seam (21) at a predeterminable frequency,
- **in that** each scan is correlated with a time signal, with the time of the scanning of at least one defective scan point being recorded with the time signal,
- an analysis module is provided which determines the coordinates of the defect locations from the scan signals obtained by means of the scans,
- the analysis module is also intended to store the coordinates of the defect locations, and
- **in that** a localization module determines the spatial arrangement of the defects in the weld seam by evaluation of a velocity profile of the movement apparatus during the scans, of the time signal associated with the defective scan points, and of the coordinates of the defect locations produced by the analysis module.

2. Defect detection system according to Claim 1, **characterized in that** the localization module is connected to a control unit for the processing device, which control unit further processes the determined spatial arrangement of the defects.

3. Defect detection system according to Claim 2, **characterized in that** the control unit for the processing device further processes the spatial arrangement of the defects by means of application software.

4. Defect detection system according to one of the abovementioned claims, **characterized in that** the scanning apparatus is a laser scanning apparatus (30).

5. Defect detection system according to one of the abovementioned claims, **characterized in that** defects are recordable over a plurality of scans.

6. Defect detection system according to one of the abovementioned claims, **characterized in that** the processing device is a machine tool or a robot system, in particular a welding robot system.

7. Defect detection system according to one of Claims 2 to 6, **characterized in that** the control unit for the movement apparatus produces the time signal and/or a signal which characterizes the velocity profile of the movement apparatus.

8. Defect detection system according to one of the abovementioned claims, **characterized in that** the frequency can be predetermined by the scanning apparatus.

9. Defect detection system according to one of the abovementioned claims, **characterized in that** the frequency for scanning the weld seam is 500 Hz.

10. Defect detection system according to one of the abovementioned claims, **characterized in that** the analysis module and the localization module form image processing software which is integrated in a data processing device (40).

11. Defect detection system according to one of the abovementioned claims, **characterized in that** the analysis module and the localization module are integrated in a data processing device, which communicates with the control unit for the processing device via a standardized XML interface.

12. Defect detection system according to one of Claims 1 to 11, **characterized in that** the scanning apparatus (30) can be moved at a uniform predeterminable velocity.

13. Method for identifying defects in weld seams (21), with a scanning apparatus which is fitted to a movement apparatus for a processing device being moved at a defined velocity over at least one weld seam (21) to be examined, **characterized in that**
- the weld seam (21) is scanned by means of the scanning apparatus (30) at a predeterminable frequency, and each scan relates to an associated time signal, with the time of the scanning of at least one defective scan point being recorded with the time signal,
- the coordinates of the defect locations are determined and stored by means of an analysis module from the scan signals obtained by means of the scans, and
- the spatial arrangement of the defect locations in the weld seam is determined by means of a localization module by evaluation of a velocity profile of the movement apparatus during the scans, of the time signal associated with the defective scan points, and of the coordinates of the defect locations produced by the analysis module.

14. Method according to Claim 13, **characterized in that** the determined spatial arrangement of the defects is transmitted to a control unit (12) for the processing device, for further processing.

15. Method according to Claim 14, **characterized in that** the spatial arrangement of the defects is processed further by means of application software in the control unit for the processing device.

16. Method according to one of Claims 13 to 15, **characterized in that** defects are recorded over a plurality of scans.

17. Method according to one of Claims 13 to 16, **characterized in that** a time signal and/or a signal which characterizes the velocity profile of the movement apparatus are/is produced by the control unit for the movement apparatus.

18. Method according to one of Claims 13 to 17, **characterized in that** the frequency is predetermined by the scanning apparatus (30).

19. Method according to one of Claims 13 to 18, **characterized in that** the analysis module and the localization module are integrated as image processing software in a data processing device.

20. Method according to one of Claims 13 to 19, **characterized in that** the analysis module and the localization module are integrated in a data processing device, which communicates with the control unit for the processing device via a standardized XML interface.

21. Method according to one of Claims 13 to 20, **characterized in that** the scanning apparatus is moved at a uniform predeterminable velocity.

22. Use of the defect detection system and method according to the invention according to one of Claims 1 to 21 for repairing defective weld points.

## Revendications

1. Système de recherche de défaut pour détecter des points de défaut sur des cordons de soudure (21), comprenant un dispositif de palpage (30) qui est monté sur un dispositif de déplacement d'un équipement d'usinage, le dispositif de palpage (30) pouvant être déplacé par le dispositif de déplacement au-dessus d'au moins un cordon de soudure à examiner, **caractérisé en ce que**
- le dispositif de palpage (30) palpe le cordon de soudure (21) avec une fréquence pouvant être prédéfinie,
- **en ce que** chaque palpage est en corrélation avec un signal de temps, l'instant du palpage d'au moins un point de palpage présentant des points de défaut étant détecté avec le signal de temps,
- il est prévu un module d'analyse qui détermine les coordonnées des points de défaut à partir des signaux de palpage obtenus par les palpages,
- le module d'analyse est en outre prévu pour mémoriser les coordonnées des points de défaut, et
- **en ce qu'**un module de localisation détermine la disposition dans l'espace des points de défaut du cordon de soudure en interprétant une courbe de vitesse du dispositif de déplacement pendant les palpages, le signal de temps associé aux points de palpage présentant des points de défaut et les coordonnées des points de défaut fournies par le module d'analyse.

2. Système de recherche de défaut selon la revendication 1, **caractérisé en ce que** le module de localisation est relié avec une unité de commande de l'équipement d'usinage, laquelle effectue un traitement postérieur de la disposition dans l'espace déterminée des points de défaut.

3. Système de recherche de défaut selon la revendication 2, **caractérisé en ce que** l'unité de commande de l'équipement d'usinage effectue un traitement postérieur de la disposition dans l'espace des points de défaut au moyen d'un logiciel d'application.

4. Système de recherche de défaut selon l'une des revendications précédentes, **caractérisé en ce que** le dispositif de palpage est un dispositif de palpage à laser (30).

5. Système de recherche de défaut selon l'une des revendications précédentes, **caractérisé en ce que** les défauts peuvent être détectés par le biais de plusieurs palpages.

6. Système de recherche de défaut selon l'une des revendications précédentes, **caractérisé en ce que** l'équipement d'usinage est une machine-outil ou un système robotisé, notamment un système à robot de soudage.

7. Système de recherche de défaut selon l'une des revendications 2 à 6, **caractérisé en ce que** l'unité de commande du dispositif de déplacement délivre un signal qui caractérise la courbe de vitesse du dispositif de déplacement et/ou le signal de temps.

8. Système de recherche de défaut selon l'une des revendications précédentes, **caractérisé en ce que** la fréquence peut être prédéfinie par le dispositif de palpage.

9. Système de recherche de défaut selon l'une des revendications précédentes, **caractérisé en ce que** la fréquence de palpage du cordon de soudure est égale à 500 Hz.

10. Système de recherche de défaut selon l'une des revendications précédentes, **caractérisé en ce que** le module d'analyse et le module de localisation forment un logiciel de traitement d'image qui est intégré dans un équipement de traitement de données (40).

11. Système de recherche de défaut selon l'une des revendications précédentes, **caractérisé en ce que** le module d'analyse et le module de localisation sont intégrés dans un équipement de traitement de données qui communique avec l'unité de commande de l'équipement d'usinage par le biais d'une interface XML normalisée.

12. Système de recherche de défaut selon l'une des revendications 1 à 11, **caractérisé en ce que** le dispositif de palpage (30) peut être déplacé à une vitesse constante pouvant être prédéfinie.

13. Procédé de détection de points de défaut sur des cordons de soudure (21), un dispositif de palpage qui est monté sur un dispositif de déplacement d'un équipement d'usinage étant déplacé à une vitesse définie au-dessus d'au moins un cordon de soudure (21) à examiner, **caractérisé en ce que**
- le cordon de soudure (21) est palpé au moyen du dispositif de palpage (30) avec une fréquence pouvant être prédéfinie et chaque palpage est en relation avec un signal de temps associé, l'instant du palpage d'au moins un point de palpage présentant des points de défaut étant détecté avec le signal de temps,
- les coordonnées des points de défaut sont déterminées et mémorisées au moyen d'un module d'analyse à partir des signaux de palpage obtenus par les palpages, et
- la disposition dans l'espace des points de défaut du cordon de soudure est déterminée au moyen d'un module de localisation par interprétation d'une courbe de vitesse du dispositif de déplacement pendant les palpages, du signal de temps associé aux points de palpage présentant des points de défaut et des coordonnées des points de défaut fournies par le module d'analyse.

14. Procédé selon la revendication 13, **caractérisé en ce que** la disposition dans l'espace déterminée des points de défaut est transmise à une unité de commande (12) de l'équipement d'usinage pour effectuer un traitement postérieur.

15. Procédé selon la revendication 14, **caractérisé en ce que** la disposition dans l'espace des points de défaut est soumise à un traitement postérieur au moyen d'un logiciel d'application de l'unité de commande de l'équipement d'usinage.

16. Procédé selon l'une des revendications 13 à 15, **caractérisé en ce que** les défauts sont détectés par le biais de plusieurs palpages.

17. Procédé selon l'une des revendications 13 à 16, **caractérisé en ce qu'**un signal qui caractérise la courbe de vitesse du dispositif de déplacement et/ou le signal de temps sont délivrés par l'unité de commande du dispositif de déplacement.

18. Procédé selon l'une des revendications 13 à 17, **caractérisé en ce que** la fréquence est prédéfinie par le dispositif de palpage (30).

19. Procédé selon l'une des revendications 13 à 18, **caractérisé en ce que** le module d'analyse et le module de localisation sont intégrés dans un équipement de traitement de données sous la forme d'un logiciel de traitement d'image.

20. Procédé selon l'une des revendications 13 à 19, **caractérisé en ce que** le module d'analyse et le module de localisation sont intégrés dans un équipement de traitement de données, lequel communique avec l'unité de commande de l'équipement d'usinage par le biais d'une interface XML normalisée.

21. Procédé selon l'une des revendications 13 à 20, **caractérisé en ce que** le dispositif de palpage est déplacé à une vitesse constante pouvant être prédéfinie.

22. Utilisation du système de recherche de défaut et du procédé selon l'une des revendications 1 à 21 pour réparer des points de soudure défectueux.
